(19) Europäisches Patentamt
European Patent Office
Office européen des brevets

(11) **EP 2 229 820 B1**

(12) # EUROPEAN PATENT SPECIFICATION

(45) Date of publication and mention
of the grant of the patent:
**03.07.2013 Bulletin 2013/27**

(51) Int Cl.:
*A23J 1/14* (2006.01)   *A23K 1/14* (2006.01)

(21) Application number: **09152699.6**

(22) Date of filing: **12.02.2009**

(54) **Method for detoxifying plant constituents**

Verfahren zur Entgiftung von Pflanzenbestandteilen

Procédé de détoxification de composants végétaux

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**22.09.2010 Bulletin 2010/38**

(73) Proprietors:
• **Makkar, Harinder**
**00143 Rome (IT)**
• **JatroSolutions GmbH**
**70599 Stuttgart (DE)**

(72) Inventors:
• **Makkar, Harinder**
**00143 Rome (IT)**
• **Becker, Prof. Dr., Klaus**
**72622 Nürtingen-Reudern (DE)**

(74) Representative: **Elbel, Michaela**
**Pateris**
**Patentanwälte, Partnerschaft**
**Postfach 33 07 11**
**80067 München (DE)**

(56) References cited:
• **BERCHMANS ET AL: "Biodiesel production from
crude Jatropha curcas L. seed oil with a high
content of free fatty acids" BIORESOURCE
TECHNOLOGY, ELSEVIER, GB, vol. 99, no. 6, 5
January 2008 (2008-01-05), pages 1716-1721,
XP022410797 ISSN: 0960-8524**

• **MAKKAR HARINDER ET AL: "Removal and
Degradation of Phorbol Esters during Pre-
treatment and Transesterification of Jatropha
curcas Oil" JOURNAL OF THE AMERICAN OIL
CHEMISTS' SOCIETY, vol. 86, no. 2, 10 December
2008 (2008-12-10), pages 173-181, XP002526665
ISSN: 0003-021X(print) 1558-9331(ele**

• **MARTINEZ-HERRERA J ET AL: "Chemical
composition, toxic/antimetabolic constituents,
and effects of different treatments on their levels,
in four provenances of Jatropha curcas L. from
Mexico" FOOD CHEMISTRY, ELSEVIER
SCIENCE PUBLISHERS LTD, GB, vol. 96, no. 1, 1
May 2006 (2006-05-01), pages 80-89,
XP025130194 ISSN: 0308-8146 [retrieved on
2006-05-01]**

• **MAKKAR H P S ET AL: "Nutritional studies on
rats and fish (carp Cyprinus carpio) fed diets
containing unheated and heated Jatropha curcas
meal of a non-toxic provenance" PLANT FOODS
FOR HUMAN NUTRITION (DORDRECHT), vol. 53,
no. 3, 1999, pages 183-192, XP002526666 ISSN:
0921-9668**

• **AREGHEORE E.M. ET AL.: "Detoxification of a
toxic variety of Jatropha curcas using heat and
chemical treatments, and preliminary nutritional
evaluation with rats" S. PAC. J. NAT. SCI., vol. 21,
2003, pages 50-56, XP002526667**

• **HAAS W. ET AL.: "Novel 12-deoxy-16-
hydroxyphorbol diesters isolated from the seed
oil of Jatropha curcas" J. NAT. PROD., vol. 65,
2002, pages 1434-1440, XP002526668**

• RAKSHIT K D ET AL: "Toxicity studies of detoxified Jatropha meal (Jatropha curcas) in rats" FOOD AND CHEMICAL TOXICOLOGY, PERGAMON, GB, vol. 46, no. 12, 1 December 2008 (2008-12-01), pages 3621-3625, XP025674702 ISSN: 0278-6915 [retrieved on 2008-09-13]

**Description**

**Field of the invention**

The present invention relates to the technical field of detoxification processes. Further, the present invention concerns a method for detoxifying plant constituents from *Jatropha.* In addition, a detoxified material of *Jatropha* and the use of the detoxified material for producing nourishment are described.

**Background of the invention**

*Jatropha* is a genus of succulent plants from the large family *Euphorbiaceae* with seeds that weigh from 0.4 to over 1 gram. One ton of *Jatropha* seeds yields approximately 650 kg of kernels that give an oil of about 390 kg. The residue of the extracted material, also called kernel meal, is about 260 kg. *Jatropha* oil is mainly used as a source of energy directly or after esterification. According to its fatty acid composition and physical parameters, it is well-suited for conversion into biodiesel by conventional processes, and quality parameters of biodiesel produced from *Jatropha* oil meet the EU's EN14214 standards.

*Jatropha curcas,* a certain species of the genus *Jatropha,* shows two different genotypes, a toxic and a low-toxic one. The toxic genotype is considered to be more resistant to diseases and is not grazed by animals. The toxicity of *Jatropha curcas* seed meal of the toxic genotype is ascribed to at least six different phorbol esters. The phorbol esters are reported to mimic the action of diacylglycerol, an activator of protein kinase C that regulates different signal transduction pathways. Interference with the activity of protein kinase C affects a number of processes including phospho lipid and protein synthesis, enzyme activities, DNA synthesis, phosphorylation of proteins, cell differentiation and gene expression. Phorbol esters are also co-carcinogens and have purgative and skin-irritant activities. In humans accidental poisoning by *Jatropha curcas* seeds has been reported to elicit giddiness, vomition and diarrhea. Mortality has also been reported in a number of animal species, like mice, chicks and goats.

Trypsin inhibitors, lectin and phytate are also present in *Jatropha curcas* seed meal of the toxic genotype at high concentrations. However, they were not responsible for acute toxicity. Trypsin inhibitors and lectins are heat-labile and can be destroyed by moist heating. In contrast, phorbol esters are heat-stable and hence heat treatment is not effective to detoxify kernel meal from the toxic genotype of *Jatropha curcas.*

The kernel meal of *Jatropha curcas* left after oil extraction is rich in protein with an acute protein content of approximately 60 %. The levels of essential amino acids except lysine in kernel meal are comparable with the Food and Agriculture Organization (FAO) reference protein for a growing child of 2 to 5 years of age. A comparison between the amino acid composition of *Jatropha curcas* meal and soybeans revealed an almost similar pattern for all essential amino acids except lysine and sulfur amino acids, which are lower and higher, respectively, in the *Jatropha curcas* meal. Compared to castor bean meal, the levels of essential amino acids in the *Jatropha* meals are higher or similar to those of castor bean meal. This prompted the inventors to speculate that the kernel meal of *Jatropha curcas* would be an excellent feed after detoxification.

To detoxify *Jatropha curcas* press cake and oil, Gross et al. (1997) applied heat treatment with 91 % moisture, followed by lyophilisation and washing with 92 % ethanol. Subsequent feeding experiments with the detoxified press cake on fish and mice showed that fish grew and reproduced without problems, but mice grew slower than control groups fed on soy. The slower growth of mice is probably ascribed to the remaining 2 % of toxic substances in the press cake. A toxicity evaluation by e.g. blood parameters or histopathology was not conducted. In addition, used fish were undefined ornamental aquarium fish.

In Aregheore et al. (2003), the kernel meal of the toxic *Jatropha curcas* genotype was detoxified by heat and different chemical treatments, wherein the defatted meal was mixed with either sodium hydroxide alone or sodium hydroxide with sodium hypochlorite to form a paste that was heat treated, lyophilisated and optionally washed with water or methanol. Controls groups were untreated, only treated by heat or heat treated followed by washing with methanol. The control and treated meals were used in diets to assess toxicity and nutritive value of detoxified *Jatropha curcas* meal in rats. In meals washed with methanol, phorbol ester concentrations were reduced up to 0.05 mg/g, and the growth was better than on casein containing diets. However, the rats on a casein containing diet showed diarrhea and adverse effects and therefore, this experiment cannot conclusively prove that the methanol washed meal was as good as casein diet. In addition, toxicity studies were not conducted. Therefore, it is not possible to conclude that these treatments provide a detoxified product safe for addition into feed for farm and aquaculture animals.

Martinez-Herrera et al. (2006) attempted different treatments on kernel meals samples of the toxic genotype of *Jatropha curcas* to neutralize the toxic anti-nutrients present. Trypsin inhibitors were easily inactivated with moist heating, the phytate level was slightly decreased by irradiation and the phorbol ester content was reduced either by ethanol extraction or sodium hydrogen carbonate treatment or a combination of both. The combination of ethanol and sodium hydrogen carbonate extraction achieved reduction of phorbol esters to 0.08 mg/g in the treated kernel meal.

However, phorbol esters were still present in a detectable concentration that is too high for producing feed for farm animals and aquaculture species from the treated kernel meal.

Makkar, et al., (2009) analyzed the flow of phorbol esters during pre-treatment and biodiesel production from toxic Jatropha oil, testing the phorbol ester concentration after various production steps. Thereby the authors revealed that after stripping/deodorizing at high temperatures destroyed phorbol esters in the oil samples. Based on this observation, they suggested a method for destroying phorbol esters by using stripping/deodorizing conditions at 260°C and 3 mbar injecting a 1 % steam for destroying phorbol esters.

Up to now, there is no method to remove phorbol esters from plant material to provide a safe feed for human or livestock diet, which nutritional value is still useful. Therefore, there is a great need for a method to detoxify plant material of *Jatropha* species for producing a non-toxic substance still rich of protein.

The solution to this problem is achieved by the embodiments of the present invention characterized by the claims, and described further below.

## Summary of the invention

It is an object of the present invention to provide a method for detoxifying plant constituents from *Jatropha* comprising in the following order the steps of:

    a) providing at least one plant constituent of *Jatropha;*
    b) adding a solvent comprising simultaneously methanol and sodium hydroxide to the constituent to obtain a mixture;
    c) heating the mixture; and
    d) separating the mixture to yield a residue;

wherein the solvent comprises methanol at a concentration of about 70 % to about 95 % and sodium hydroxide at a concentration of about 0.01 M to about 0.3 M, a quantitative proportion of the plant constituent to the solvent is about 1:10 (w/v) in the mixture and a phorbol ester concentration of the residue is below 10 ppm.

Furthermore, a detoxified material of *Jatropha* obtainable by the method according to the invention for producing a nourishment is described.

In addition, the use of the detoxified material according to the invention for producing a nourishment, preferably a feed for farm animals and aquaculture species is described.

## Brief description of the drawings

Figure 1 shows an HPLC chromatogram of untreated *Jatropha* kernel meal, wherein the retention time is depicted on the X-axis and the intensity is depicted on the Y-axis. Detected phorbol ester peaks were emphasized by a circumferential rectangle.

Figure 2 shows an HPLC chromatogram of a detoxified *Jatropha* kernel meal treated by step A for 30 minutes (as described in Materials and Methods).

Figure 3 shows an HPLC chromatogram of a detoxified *Jatropha* kernel meal treated by steps A and B for a total of 60 minutes (as described in Materials and Methods).

Figure 4 shows a weekly gain of common carps (*Cyprinus carpio*) that were fed by a diet containing different contents of detoxified *Jatropha* kernel meal treated by step A alone or steps A and B as well as control animals.

## Detailed description of the invention

The present invention is directed to a method for detoxifying plant constituents from *Jatropha* comprising in the following order the steps of:

    a) providing at least one plant constituent of *Jatropha;*
    b) adding a solvent comprising simultaneously methanol and sodium hydroxide to the constituent to obtain a mixture;
    c) heating the mixture; and
    d) separating the mixture to yield a residue;

wherein the solvent comprises methanol at a concentration of about 70 % to about 95 % and sodium hydroxide at a concentration of about 0.01 M to about 0.3 M, a quantitative proportion of the plant constituent to the solvent is about 1:10 (w/v) in the mixture and a phorbol ester concentration of the residue is below 10 ppm.

The term "detoxifying" as used herein refers to reducing, removing or extracting at least one toxic agent from toxic and low-toxic plant constituents, so that they are non-toxic, i.e. elicits no signs of poisoning. The term *"Jatropha"* as used herein refers to a genus of approximately 175 succulent plants from the family *Euphorbiaceae.* As with many members of the family *Euphorbiaceae, Jatropha* contains compounds, which are highly toxic. Advantageously, *Jatropha* is resistant to drought, and produces seeds containing up to 40 % oil. When the seeds are crushed and processed, the resulting oil can be used in a standard diesel engine as biodiesel, while the residue can also be processed into bio mass to power electricity plants or to be used as a fertilizer. The term "plant constituent" as used herein refers to any part of *Jatropha* including extracts, defatted kernel meal, processing residues, granulates, grounded particles of any size, leaves, seeds, fruits, sap, branches, ligneous parts, roots and shoots. The term "plant constituents" also comprise elements derived from *Jatropha,* e.g. elements that are modified or processed, like chemical derivates. The term "solvent comprising methanol and sodium hydroxide" as used herein refers to a liquid including methanol and sodium hydroxide. Added to the constituents from *Jatropha,* the solvent results in a liquid mixture that includes a homogeneous mixture, but particularly a heterogeneous mixture, such as a suspension and emulsion. The term "adding to obtain a mixture" as used herein includes all kinds of mixing and disintegration processes, like milling, grinding, crushing, shaking, vortexing, panning, rotating, or blending etc.. The term "mixture" as used herein includes blends, composites and conglomerates.The term "separating the mixture" as used herein refers to isolating components from the mixture for example by precipitating, filtering, centrifuging, extracting, decanting, distillation, discarding the supernatant, obtaining a residue, capturing, or entrapping the desired substances. The term "phorbol ester" as used herein refers to any ester of phorbol, in which two hydroxyl groups on neighboring carbon atoms are esterified to fatty acids. Phorbol and phorbol esters are members of the tigliane family of diterpenes that are defined by polycyclic compounds. One of the most common phorbol esters is 12-O-tetradecanoylphorbol-13-acetate (TPA). Phorbol esters are generally known for their tumor promoting activity. The phorbol esters mimic the action of diacylglycerol, an activator of protein kinase C, which regulates different signal transduction pathways and several other metabolic activities. Even at very low concentrations phorbol esters contained in animal feed show toxicological manifestation. This toxicity limits the use of *Jatropha* constituents as feed for farm animals and aquaculture species. The term "detection limit of high performance liquid chromatography" as used herein refers to a concentration of a substance that is barely detectable by high performance liquid chromatography (HPLC). Below the HPLC detection limit the substance cannot be detected by HPLC any more. HPLC is a form of column chromatography to separate, identify and quantify compounds, wherein a column is utilized that holds for example chromatographic packing material, a pump that moves a mobile phase through the column and a detector that shows the retention times of the molecules. The detection limit of the HPLC method depends on the experimental conditions and amounts for instance to about 10 ppm.

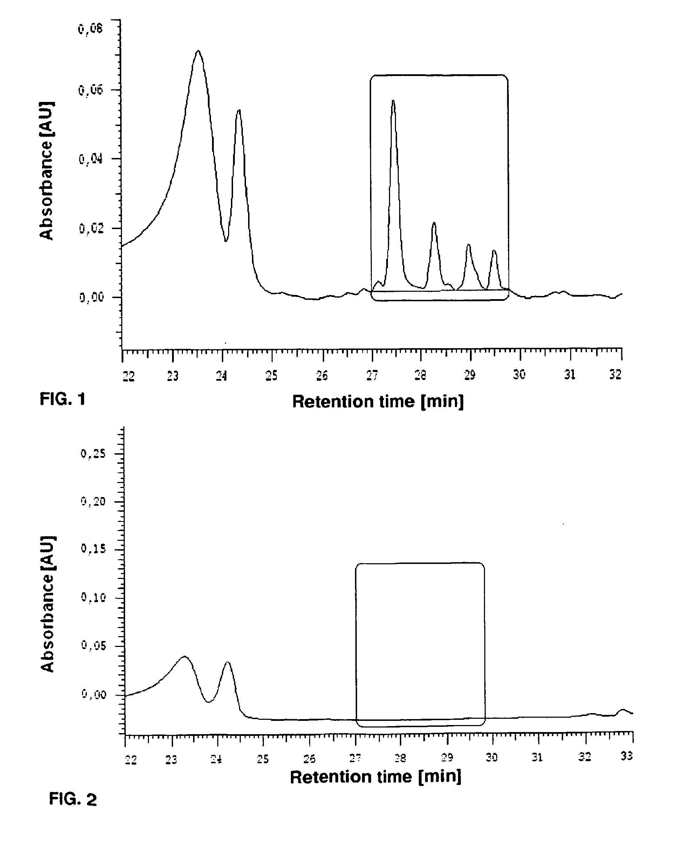

According to the invention, a process is provided to detoxify plant constituents from *Jatropha,* based on the removal of phorbol esters using methanol in presence of alkali followed by heating and separating the mixture to yield a residue. The phorbol ester concentration of the residue is below the detection limit of HPLC. An HPLC chromatogram of untreated *Jatropha* plant constituents shows four peaks of elution that represent phorbol esters (Figure 1). These phorbol ester peaks are absent in HPLC chromatograms of *Jatropha* constituents treated according to the invention (Figure 2), which means that plant material detoxified according to the invention is free of phorbol esters as determined by HPLC.

*Jatropha* kernel meal is a valuable byproduct of oil and biodiesel production showing high crude protein content and a high quality in the composition of essential amino acids. By the detoxification method according to the invention by-product and constituents of *Jatropha* can be used as nourishment, especially in feed for farm animals and aquaculture species. Thereby, *Jatropha* is used in different ways, and valuable area under crop that is otherwise needed for feed production can be saved. Particularly, in hot dry regions the nutrient conditions and agricultural situation can be improved by the method according to the invention, because *Jatropha* is resistant to drought and pest, and can be used to reclaim and cultivate poor anddegraded soil. Scarcity of livestock feed is expected to be overcome to some extent by using the detoxified *Jatropha* kernel meal according to the invention.

Without intending to be bound by any theory, it is believed that reduction in phorbol ester concentration of the residue below the detection limit of HPLC is ascribed to (i) the order of the method steps a) to d) and (ii) the combined application of methanol and sodium hydroxide to *Jatropha* plant constituents. Using methanol alone without sodium hydroxide (NaOH) produces a residue containing a remarkable content of phorbol esters of 0.06 mg/g showing that NaOH during extraction is imperative to reduce the phorbol ester concentration of the residue below the detection limit of HPLC. When *Jatropha* constituents were heat treated or autoclaved before the treatment with methanol alone or methanol in combination with NaOH the phorbol ester content of the product was 0.05 mg/g, whereas phorbol esters were not detected by HPLC in residues detoxified by the method according to the invention. This indicates that the order of solvent extraction and heat treatment is decisive.

In a preferred embodiment of the invention the method further comprises in the following order the steps of:

> e) adding methanol to the residue to obtain a blend;
> f) heating the blend; and
> g) separating the blend to obtain a second residue.

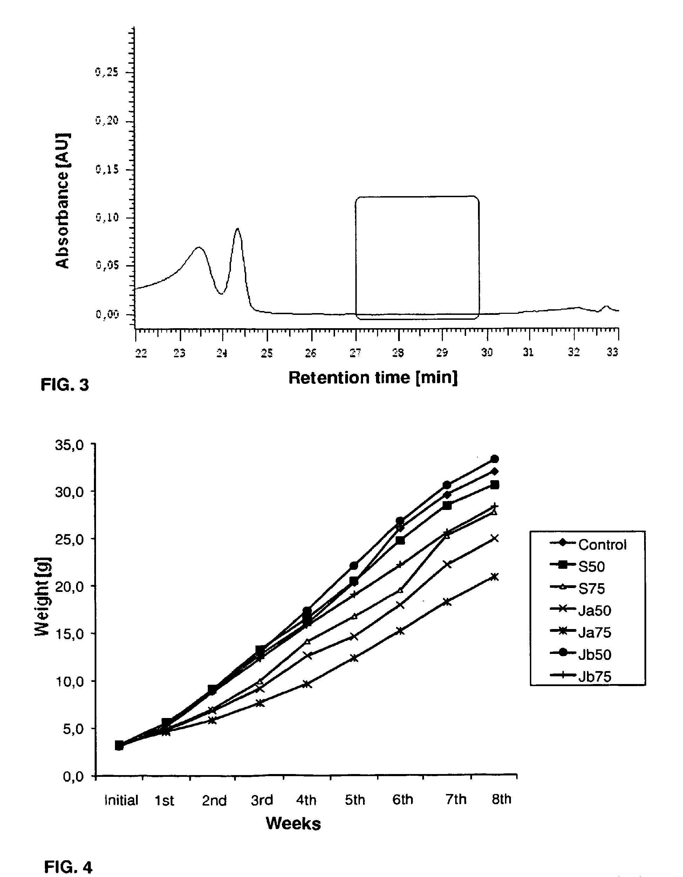

Steps e) to g) further reduce the phorbol ester concentration of the second residue compared to the first residue. An HPLC chromatogram of untreated *Jatropha* plant constituents shows four peaks of elution that represent phorbol esters (Figure 1). These phorbol ester peaks are absent in HPLC chromatograms of the second Jat*ropha* residue detoxified according to the invention (Figure 3), which means that the phorbol ester concentration of second residue is at least below the detection limit of HPLC.

In addition, the detoxification process leading to the second residue does not decrease the amino acid content and decreases the protein availability only slightly, as measured by pepsin and pepsin plus trypsin digestibility. However, the protein digestibility of the detoxified second residue is still of the same order as for soy meal, ground nut meal and other conventional seed meals.

The second residue according to the invention showed a total protein and amino acid contents that are similar to that in untreated raw material from *Jatropha.* The performance of the feed, whose content of fish meal protein is replaced at 75 % by the detoxified second residue according to the invention, was comparable to the feed, whose content of fish meal protein is replaced at 75 % by soybean meal, but was lower compared to unreplaced 100 % fish meal feed. Furthermore, the performance of the feed, whose content of fish meal protein is replaced at 50 % by the detoxified second residue according to the invention, was similar to unreplaced 100 % fish meal feed. Therefore, the second residue according to the invention can be safely included in human nutrition and animal feed.

In another embodiment the phorbol ester content of the second residue according to the invention is tested in living animals that are more sensitive to toxic substances than HPLC. In a bioassay of a mollusk the method for detoxification according to the invention reduces phorbol ester concentration of the second residue so that 100 % of mollusks treated with the second residue survive, i.e. no mortality is induced. This means that the second residue exert no effect on survival rate.

The term "mollusk" as used herein refers to an animal belonging to the phylum *mollusca* that is divided into 10 classes, like *Gastropoda, Cephalopoda* and *Bivalvia.* Mollusks have developed a manifold range of body structures with few synapomorphies, like two pairs of main nerve cords, the dorsal mantle, which secrets calcareous spicules, plates or shells, and the anus and genitals that open into the mantle cavity. The term "bioassay as used herein refers to a system, wherein the effect of potential toxic substances on living organisms was tested. The bioassay can be qualitative or quantitative, and the organism under investigation can be in an artificial or natural environment. In the most preferred embodiment mollusk activity is measured in an aqueous solution of the substance under investigation at appropriate concentrations and exposure times. After the exposure time the substance is washed away from the organisms, placed in control solution and left under observation for further time, after which the organisms are collected and counted. Mortality is indicated for example by discoloration, absence of muscle contraction, hemorrhage and deterioration of the body tissues.

Phorbol esters are known to affect mollusks and cause 100 % mortality at 1 ppm (0.001 mg/g) in water. The method according to this embodiment leads to a second residue, which phorbol ester concentration is further reduced compared to the first residue, and no mortality is observed by the detoxified second residue according to the invention in the mollusk bioassay. Therefore, the phorbol ester concentration of the second residue is below the sensitivity range of the mollusk bioassay. Detection limit of the mollusk bioassay is about 10 fold lower than that of HPLC. Therefore, the second residue according to the invention is completely detoxified and can be safely included in human nutrition and animal feed.

In another embodiment the mollusk is a snail, preferably selected from the group consisting of *Oncomelania hupensis, Biomphalaria glabrata* and *Bulinus globosus.* These three snail species are especially suited for toxicity bioassays, because they are very sensitive to toxic substances, like phorbol esters, and they are easy to handle under laboratory and experimental conditions.

In an additional embodiment of the invention a dosage of the second residue per one mollusk is approximately 0.1 grams in the bioassay. One gram of the residue is extracted, and the extract is dried, dissolved in ethanol and diluted in one liter of water, which results in a preferred concentration for a mollusk bioassay.

In a further preferred embodiment carps (*Cyprinus carpio*) are used to evaluate the concentration of toxic substances and alimentary quality of the second residue, wherein no adverse effects are detected in carps fed with the second residue. Carps are species very sensitive to toxin, and are generally used for toxicological evaluations. Carps fed with the second residue according to the invention showed growth performance, blood parameters, hepatosomatic and spleen index as well as digestibility of dry matter and nutriment that were comparable with those of control groups. In addition, quantitative determinations of alanine amino transferase, lysine activity, total bilirubin content and ion levels in the blood of treated carps were within the normal range in fish and did not indicate any toxicity. The feeding of the second residue on carp did not produce any adverse effects in organs, like liver, intestine and muscle, and these organs were free of phorbol esters indicating that the fish is safe for human consumption. Therefore, the second residue according to the invention is completely detoxified and can be safely included in animal feed.

In a further preferred embodiment of the invention the phorbol ester concentration of the second residue is about 0.001 mg/g or less. The bioassay of a mollusk is very sensitive to detect phorbol esters in detoxified materials. In snails, phorbol esters at 0.001 mg/g cause 100 % mortality. The second residue according to the invention showed a mortality of 0 % in a bioassay of a mollusk and even no signs of toxicity in blood parameters and histopathology. Therefore, the measured concentration of phorbol ester is at least below 0.001 mg/g.

In the most preferred embodiment of the invention *Jatropha* is *Jatropha curcas,* preferably a toxic genotype of *Jatropha curcas,* or a cross of different *Jatropha* species, preferably of toxic genotypes of *Jatropha curcas.*

A preferred cross is a cross between *Jatropha curcas* and another *Jatropha* species, like *Jatropha cathartica, Jatropha dhofarica, Jatropha glandulifera, Jatropha* gossypiifolia, *Jatropha integerrima, Jatropha macrantha, Jatropha macrorhiza, Jatropha mahafalensis, Jatropha malacophylla,* and *Jatropha multifida.*

*Jatropha curcas* is a member of the genus *Jatropha. Jatropha curcas* is favorable species, because it is not grazed by animals, grows readily in poor and stony soil, is drought, pest and disease resistant, yields high quality biodiesel and is suitable to reclaim eroded land. Kernel of *Jatropha curcas* has an oil content close to 60 %. Due to its fatty acid composition and physical parameters, oil from *Jatropha curcas* is markedly suited for production of biodiesel, wherein kernel meal remains as byproduct.

There are two genotypes of *Jatropha curcas,* a toxic one and a low-toxic one that is found only in Mexico. Approximately 25 to 30 million ha are currently cultivated, largely with the toxic genotype, since this genotype is considered to be more resistant to diseases and pests. The toxic genotype of *Jatropha curcas* includes a Cape Verde and a Nicaragua variety. The low-toxic genotype of *Jatropha curcas* includes a Mexican variety. Although the phorbol ester content in the kernel of the low-toxic genotype is lower (0.11 mg/g) compared to the toxic genotype (2.2 - 2.7 mg/g), the low phorbol ester concentration of the low-toxic genotype is still capable to elicit effects, like mucus in feces of animals fed by a diet containing constituents of the low-toxic genotype of *Jatropha curcas,* as well as subclinical effects (Makkar and Becker, 1997).

A comparison between the amino acid composition of *Jatropha curcas* meal and soybean meal revealed an almost similar pattern for all essential amino acids, except lysine and sulfur amino acids.

Due to the high levels of essential amino acids, the high protein content and high protein quality, the kernel meal of the toxic genotype from *Jatropha curcas* detoxified according to the invention is an excellent protein source for human nourishment as well as animal feed.

In a further embodiment of the invention the solvent comprises methanol at a concentration of about 80 % to about 90 %, most preferably about 90 %. Optimizations studies were conducted using various concentrations of methanol. Their results demonstrate that rising concentrations of methanol further decreased phorbol ester concentration in the residues according to the invention. The concentration of 90 % methanol is found to reduce the phorbol ester concentration in the first and the second residue to maximum extend.

In another preferred embodiment of the invention the solvent comprises sodium hydroxide at a concentration of about 0.05 M to about 0.2 M, most preferably about 0.1 M. The extraction of phorbol esters is maximal at 0.1 M NaOH. At higher NaOH concentrations loss in dry matter increased from 15 % with 0.1 M NaOH to 25 % with 0.3 M NaOH. The protein loss also increased with higher concentrations of NaOH.

In a further preferred embodiment of the invention the quantitative proportion of the plant constituent to methanol is about 1:10 (w/v) in the blend.

Methanol was added to the *Jatropha* plant constituent in the ratio of 1:10 (w/v), which yields an optimal mixing ratio to detoxify the *Jatropha* plant constituent very effective.

In an also preferred embodiment of the invention heating is performed at a temperature of about 50°C to about 70°C, preferably about 60°C to about 70°C. The removal of phorbol esters was lowest at about 50°C and identical at about 60°C to about 70°C. Therefore, the temperature of about 60°C to about 70°C is the optimal range to remove phorbol esters from *Jatropha* constituents.

In a further embodiment the method according to the invention further comprises the step of washing the residue with methanol. The term "washing" as used herein includes overlaying the residue with methanol and subsequent drying by filtering, suction or decantation; mixing or elutriating the residue with methanol and subsequent separation; and spilling, pouring and rinsing the residue by methanol e.g. in combination with filtration. By the washing step the phorbol ester concentration in the *Jatropha* constituent is further reduced, whereby the detoxification process is again improved.

In yet another embodiment the method according to invention further comprises the step of autoclaving the residue, preferably at a moisture of about 75 %. During autoclaving, the residue is exposed to saturated steam at a required temperature for an appropriate time. In previous studies, autoclaving at 121°C for 30 minutes at 66 % moisture was used to inactivate lectins and trypsin inhibitors. However, in the present invention moisture was preferably increased to 75 %, whereby the time for inactivation of lectins and trypsin inhibitors is reduced to 50 % and content of lectin and trypsin inhibitors is further decreased to non-detectable levels.

In addition, a detoxified material of *Jatropha* obtainable by the method according to the invention for producing a nourishment is described.

Furthermore a method for use of the detoxified material according to the invention for producing a nourishment, preferably a feed for farm animals and aquacultures species is described.

Due to the crude protein content of approximately 60 % and the high level of essential amino acids, the kernel meal from the toxic genotype of *Jatropha* species is a valuable constituent or raw material for feed and nourishment after detoxification according to the invention. Phorbol esters were not detected by the HPLC method in the *Jatropha* residue detoxified according to the invention, and the second residue of the invention elicited no mortality, no histopathological changes, blood pictures remained normal and organs, like liver, intestine and muscles, were free of phorbol esters as evaluated by mollusk or carp bioassays. Therefore, nourishment produced by using *Jatropha* constituents detoxified according to the invention is safe for human and animal consumption.

## EXAMPLES

## Materials and Methods

### 1. Removal of phorbol esters

Methanol containing NaOH was added to defatted kernel meal in a round bottom flask to obtain a mixture. The flask was heated with a refluxing unit fixed on it. After heating, the mixture was transferred on a Buchner funnel and filtered to obtain the residue. The filtrate was discarded, and the first residue was washed with methanol, and the washed residue was collected.

The washed residue was transferred into another round bottom flask, and methanol in the flask was added. Again the mixture was heated while the solvent was being refluxed. The mixture was filtered and washed with methanol as stated above, and the second residue was dried at room temperature by spreading the second residue.

After adjusting the moisture, the second residue was autoclaved and dried to obtain detoxified *Jatropha* kernel meal.

### 2. Development of the detoxification procedure

Development of the detoxification procedure involves removal of phorbol esters and inactivation of trypsin inhibitor and lectin.

Optimization studies were conducted using various concentration of methanol (70%, 80%, 90% and 95 % aqueous methanol). 90 % methanol was found to be the most effective concentration for removing phorbol esters. Methanol extractions were conducted at temperatures of 50 °C, 60 °C and 70 °C during refluxing. The removal of phorbol esters was lowest at 50 °C and the same at 60 °C and 70 °C. In addition, NaOH concentration was also changed from 0 M to 0.3 M. The extraction of phorbol esters reached saturation at 0.1 M NaOH. At higher NaOH concentrations loss in dry matter increased from 15 % with 0.1 M NaOH to 25 % with 0.3 M NaOH. The protein loss also increased with higher concentrations of NaOH.

### 3. Optimized detoxification procedure

### Step A:

90 % methanol (methanol : water = 9 : 1 ) containing NaOH at a concentration of 0.1 M (0.4 % NaOH in 90 % methanol) was added to defatted kernel meal in a round bottom flask added in the ratio 1:10 (w/v) to obtain a mixture. The flask was heated for 30 min with a refluxing unit fixed on it; the temperature of the medium in the flask was 65-70°C. After heating for 30 min, the mixture was transferred on a Buchner funnel, filtered to obtain the residue, and the filtrate was discarded. The residue was washed with 90 % methanol (volume of this solvent = 1.2 times the weight of the kernel meal initially taken), and the washed residue was collected.

### Step B:

The washed residue from step A was transferred into another round bottom flask, 90 % methanol was added in the ratio of 1:10 (w/v) to obtain a mixture that was heated for 30 min while the solvent was being refluxed. The Mixture was filtered and washed with 90% methanol as stated above in step A, and the residue was dried at room temperature by spreading.

The moisture was adjusted to a content of 75 %, autoclaved at 121°C for 15 min and dried to obtain detoxified *Jatropha* kernel meal.

Use of detoxification process as illustrated in step A and step B but without NaOH in step A produced a product containing 0.06 mg/g phorbol ester, suggesting that the use of NaOH during extraction with 90 % methanol in step A is imperative.

### 4. Quantification of phorbol esters

Phorbol esters were determined at least in duplicate. 0.5 g of the samples was extracted four times with methanol. A suitable aliquot was loaded in a high-performance liquid chromatography (HPLC) reverse-phase C18 Li-Chrospher 100, 5 $\mu$m (250 x 4 mm I.D. from Merck (Darmstadt, Germany). The column was protected with a head column containing the same material. The separation was performed at room temperature (23°C) and the flow rate was 1.3 ml/min using a gradient elution. The four phorbol ester compound peaks were detected at 280 nm and appeared between 25 and 30.5 min. The spectra were taken using Merck-Hitachi L-7450 photodiode array detector. The results are expressed as equivalent to phorbol-12-myristate 13-acetate, which appeared between 31 and 32 min (Makkar et al., 1997).

### 5. Inactivation of trypsin inhibitor and lectin

Water was added to the kernel meals obtained at step A or step B to bring the moisture level to 75%. The moistened meal was then autoclaved at 121°C for 15 min. Trypsin inhibitor activity was determined (Makkar et al., 1997). Analysis of the lectin content was conducted by hemagglutination assay in round-bottomed wells of microtitre plates using 1% (v/v) trypsinized cattle blood erythrocytes suspension in saline phosphate buffer, pH 7.0 (Makkar et al., 1997).

### 6. Evaluation of *Jatropha* kernel meal using snails as a bioassay

Snails have been found to be highly sensitive to phorbol esters. At 1 ppm of phorbol esters, 100% mortality has been observed by us (Goel *et al.,* 2007). Snails were used as a bioassay to confirm the absence of phorbol esters in the kernel meal obtained at step A and step B.

The molluscicidal activity was carried out according to the protocols (Feitosa dos Santos and Sant'Ana, 1999) and (Liu *et al.,* 1997) with slight modifications. The protocol basically involved the immersion of snails in an aqueous solution of the substance under investigation at appropriate concentrations. The extracts from 1 g *Jatropha* kernel meal obtained from step A and B were pooled and dried with a final volume of 1 ml in ethanol. Ten snails were taken (snail to water ratio was 1:25 ml) and the bioassay was performed in triplicate. The exposure time of these organisms was 24 h. After this time, the snails were washed, placed in dechlorinated water and fed with lettuce, left under observation for 72 h. Dead snails were collected and counted. The snail mortality was indicated by discoloration, absence of muscle contraction, haemorrhage and deterioration of the body tissues.

Two control sets were used in order to verify the snail susceptibility: one with 1 ml of ethanol and the second consisting of dechlorinated water alone. No mortality of snails was observed in these two controls, suggesting that any mortality observed using the extracts obtained from step A and step B materials is due to the presence of phorbol esters.

### 7. *In vivo* evaluation of detoxified seed meal, using fish as a model

### 7.1 Experimental system and animals

Carp *(Cyprinus carpio)* fingerlings (about 2.0-3.0 g) used to evaluate the quality of the detoxified kernel meal as a protein supplement and the fish were kept in two 500 l capacity tanks for acclimatization. They were fed the Hohenheim standard fish diet containing approximately 38% protein, 8% lipid, 10% ash and a gross energy content of 20 kJ/g dry matter. After an acclimatization period of 20 days, 252 fish were randomly distributed into seven groups with four replicates. Each replicate contained nine fish (av. wt. 3.2 g) in an aquarium (25 l capacity). All aquaria were supplied with water at 27 $\pm$ 0.5 °C from a recirculation system. The system was subjected to a photoperiod of 12 h light : 12 h darkness. Water quality was monitored throughout the experiment. All water parameters were in the optimum range (temperature 26.2-27.1 °C, pH 7.0-7.5, dissolved oxygen 6.9-7.4 mg/l, total NH3 0.1-0.2 mg/l, nitrite 0.07-0.1 mg/l and nitrate 1-3 mg/l). Water flow was adjusted to keep the oxygen saturation above 80%. The given feeds were dispensed using an automatic feeder. Fish were weighed individually at the beginning of the experiment (av. wt. 3.2 g) and at weekly intervals during the experimental period to adjust the feeding level for the subsequent week. The fish were not fed on the weighing day. During the last 2 weeks of the experiment, fish were fed with a marker ($TiO_2$) for digestibility meas-

urement. Fecal matter was collected during the last two weeks of experiment twice a day. During the experiment there was no mortality. At the start of the experiment, 18 fish of the same population were killed and preserved at -20 °C for the analysis of the initial body composition.

The experiment was terminated after 8 weeks, and the fish were sacrificed. At the end of the experiment, fish were anesthetized by tricaine methanesulfonate (MS222) at 250 ppm in water. Blood was drawn near caudal peduncle from two fish from each replicate and transferred into a heparinized tube. Blood from one fish was used for hematological study, and the other was centrifuged at 1500×$g$ for 5 min at room temperature (24 °C) to obtain plasma, which was then stored at -20 °C for determination of cholesterol and triglycerides. Blood was drawn from one fish per replicate for serum collection. Serum was stored at -20 °C for lysozyme determination. Two fish per replicate were carefully dissected to isolate liver, intestine, muscles and kidney and stored in liquid nitrogen for further enzyme assay. Two fish per replicate were stored at -20 °C for chemical composition analysis. Prior to the determination of the proximate composition, the fish were autoclaved at 121 °C for 20 min, thoroughly homogenized using an Ultra-Turrax T25, frozen overnight and freeze-dried.

**7.2 Diet formulation**

Fishmeal and wheat meal were purchased from Kurt Becker GmbH, Bremen, Germany, and a local market respectively. Defatted soybean meal was obtained from Institute of Animal production system (480a), University of Hohenheim, Germany. Prior to feed formulation, the proximate composition of defatted *Jatropha* meal, wheat meal, soybean meal, soya concentrate and fishmeal were determined. A total of seven isonitrogenous and isoenergetic diets were formulated. Experimental diets containing crude protein 38%, crude lipid 8%, vitamin premix 2%, mineral premix 2% and TiO$_2$ 1% were prepared. The inclusion levels of the *Jatropha* meal and soybean meal were as follows: Control diet (T$_1$) was prepared with fishmeal and wheat meal, without any *Jatropha* meal and soybean meal. T$_2$: 50% fishmeal protein replaced by soybean meal (S$_{50}$); T$_3$: 75% fishmeal protein replaced by soybean meal (S$_{75}$); T$_4$: 50% fishmeal protein replaced by *Jatropha* meal (J$_{a50}$); T$_5$: 75% fishmeal protein replaced by *Jatropha* meal (J$_{a75}$); T$_6$: 50% fishmeal protein replaced by *Jatropha* meal (J$_{b50}$); T$_7$: 75% fishmeal protein replaced by *Jatropha* meal (J$_{b75}$). The final mixture of each diet was made into 2 mm diameter moist pellets and then freeze-dried (Table 1). *Jatropha* meal J$_a$ and J$_b$ were the detoxified *Jatropha* kernel meals at step A and step B, respectively.

**Table 1. Composition of the experimental diets (g/kg feed)**

| Ingredients | Experimental diets | | | | | | |
|---|---|---|---|---|---|---|---|
| | Control | $S_{50}$ | $S_{75}$ | $J_{a50}$ | Ja75 | $J_{b50}$ | $J_{b75}$ |
| Fish meal | 507.5 | 253.7 | 126.3 | 253.7 | 126.3 | 253.7 | 126.3 |
| Soybean meal | - | 342.1 | 513 | - | - | - | - |
| Wheat flour | 402.5 | 271 | 206 | 381.5 | 372 | 390 | 384.1 |
| *Jatropha* meal | - | - | - | 249.5 | 372 | 242.5 | 361.9 |
| Soya concentrate | - | 22 | 32 | 3.5 | 7 | 2 | 5 |
| Sunflower oil | 40 | 61.2 | 72.7 | 61.8 | 72.7 | 61.8 | 72.7 |
| Vitamin premix | 20 | 20 | 20 | 20 | 20 | 20 | 20 |
| Mineral premix | 20 | 20 | 20 | 20 | 20 | 20 | 20 |
| $TiO_2$ | 10 | 10 | 10 | 10 | 10 | 10 | 10 |

(continued)

| Ingredients | Experimental diets | | | | | | |
|---|---|---|---|---|---|---|---|
| | Control | $S_{50}$ | $S_{75}$ | $J_{a50}$ | Ja75 | $J_{b50}$ | $J_{b75}$ |
| Total | 1000 | 1000 | 1000 | 1000 | 1000 | 1000 | 1000 |
| Phytase (FTU) | - | 500 | 500 | 500 | 500 | 500 | 500 |
| Lysine (g) | - | - | - | 2.5 | 3.7 | 2.4 | 3.6 |

**7.3 Biochemical analysis**

The proximate composition of diet ingredients, diets and whole body of fish was determined using the standard methods of the Association of Official Analytical Chemists (AOAC). Samples of animal origin (fish bodies and fish meal) were analyzed for dry matter (DM), ash, crude protein (CP) and lipid (ether soluble lipid). Gross energy (GE) of diet ingredients, diets and fish bodies was determined with bomb calorimeter using benzoic acid as a standard.

**7.4 Growth parameters**

Growth performance and diet nutrient utilization were assessed in terms of body mass gain (BMG), specific growth rate (SGR), metabolic growth rate (MGR), feed conversion ratio (FCR) and protein productive value (PPV). These were calculated as follows (Dongmeza et al., 2006):

BMG = final body mass - initial body mass
BMG (%) = [(final body mass - initial body mass) / Initial body mass]x100
SGR = [(In final body mass in g) - In initial body mass in g) / number of trial days]x100
MGR = (body mass gain in g) / [{(initial body mass in g / 1000)$^{0.8}$+ (final body mass in g / 1000)$^{0.8}$}/2] / number of trial days
FCR = dry feed fed (g)/body mass gain (g)
PPV (%) = [(final fish body protein in g - initial fish body protein in g) / total protein consumed in g]x100
ER (%) = [(final fish body energy - initial fish body energy)/(gross energy intake)]x100
PER = fresh body mass gain (g)/crude protein fed (g)

**7.5 Digestibility measurement**

Apparent digestibility coefficients (ADCs) and digestibility of dry matter expressed as percentage were calculated using the following formula:

$$\text{Apparent dry matter digestibility (\%)} = [1 - \{(\% \ TiO_2 \ \text{in feed})/(\% \ TiO_2 \ \text{in feces})\}] \times 100$$

The nutrient digestibility was obtained using the following formula:

$$\text{Apparent nutrient digestibility (\%)} = [1 - \{(\% \ TiO_2 \ \text{in feed})/(\% \ TiO_2 \ \text{in feces}) \times (\% \ TiO_2 \ \text{in feces})/(\% \ TiO_2 \ \text{in feed})\}] \times 100$$

**7.6 Hepatosomatic index (HI), intestinal somatic index (ISI) and Spleen Index (SI)**

HSI, ISI and ISI were calculated as indicated below (Adams et al., 2003):

HSI = Liver mass (g) / body mass (g); ISI = Intestine mass (g) / body mass (g);
SI = Spleen mass (g) / body mass (g)

**7.7 Blood chemistry (hematoimmunological parameters)**

Total erythrocyte count (RBC) and total leukocyte count (WBC) were counted by Neubauer's counting chamber of hemocytometer. Care was taken to avoid trapping of air bubbles. The RBC lying inside the five small squares were counted under high power (40X) of light microscope.

The following formula was used to calculate the number of RBC per mm$^3$ of the blood sample:

$$\text{Number of RBC/mm}^3 = (N \times \text{dilution})/\text{Area counted} \times \text{Depth of fluid}$$

From analyses of Hct, Hb and RBC, the following parameters were calculated: mean cell volume, MCV = (Hct/RBC) $\times$10); mean cell hemoglobin, MCH = (Hb/RBC)$\times$10) and mean cell hemoglobin concentration, MCHC = (Hb/Hct)$\times$100.

The hemoglobin content of blood was analyzed by Reflotron Hemoglobin test (REF 10744964, Roche diagnostic GmbH, Mannheim, Germany). Hematocrit was determined on the basis of sedimentation of blood. Heparinized blood (50 μl) was taken in the hematocrit capillary (Na-heparinized) and centrifuged in the Hematocrit 210 Hettich Centrifuge (Tuttlingen Germany) to obtain hematocrit value.

Lysozyme activity of serum was measured by EnzChek Lysozyme Assay Kit (E-22013) Leiden, The Netherlands. The assay measures lysozyme activity on *Micrococcus lysodeikticus* cell walls, which are labeled to such a degree that the fluorescence is quenched. Lysozyme action relieves this quenching, yielding a dramatic increase in fluorescence that is proportional to lysozyme activity. The fluorescence increase was measured by using a spectrofluorometer that detect fluorescein. Lysozyme hydrolyzes β-(1-4)-glucosidic linkages between *N*-acetylmuramic acid and *N*-acetyl-D-glucosamine residues present in the mucopolysaccharide cell well of a variety of microorganisms.

The VetScan® Comprehensive Diagnostic Profile reagent rotor used with the VetScan Chemistry Analyzer (Scil Animal Care Company GmbH, Technischer Service, Germany) utilized dry and liquid reagents and provided quantitative determinations of alanine aminotransferase (ALT), albumin, alkaline phosphatase (ALP), total calcium (Ca$^{++}$), creatinine, globulin, glucose, phosphorus, potassium (K$^+$), sodium (Na$^+$), total bilirubin (TBIL) and total protein in heparinized whole blood.

Survival (%) = (Total number of fish harvested/ Total number of fish stocked) X 100. Gut, liver, kidney and spleen sections were cut and stained using hematoxylin and Eosin stain.

All data were subjected to a one-way analysis of variance ANOVA and the significance of the differences between means was tested using Duncan's multiple range test (P < 0.05). The software used was SAS, Version 9.1 (Statsoft Inc., Tulsa, USA). Values are expressed as means ± standard deviation.

## Results and detailed description of the figures

### 1. Phorbol ester detoxification

The HPLC chromatogram of untreated *Jatropha curcas* kernel meal is presented in Figure 1. The four peaks between 25 and 30 min of elution represent phorbol esters. The amount of phorbol esters present was 2.5 mg/g.

The HPLC chromatograms of *Jatropha* meal obtained after step A (Figure 2) and step A together with step B (Figure 3) show none of the phorbol ester peaks observed in Figure 1.

To determine the repeatability of the method the phorbol ester content was analyzed 11 times on a sample spiked with 2.5 mg/g phorbol esters. The average measured phorbol ester content was 2.55 mg/g with a standard deviation of 0.07 mg/g and a relative deviation of 2.75%.

In conclusion, *Jatropha* kernel meals obtained after step A or step B combined with step A were free of phorbol esters, as determined by the HPLC method.

### 2. Inactivation of trypsin inhibitor and lectin

In earlier studies, trypsin inhibitor and lectin were inactivated by heating at 121°C for 30 in at 66% moisture (Makkar and Becker, 1997). According to the invention the water level was increased to 75%. This reduced duration to inactivate trypsin inhibitor and lectin to 50 % (15 min). In conclusion, the heat treated kernel meals are free of trypsin inhibitor and lectin activities (Table 2).

**Table 2. Trypsin inhibitor and lectin activity of the unheated and heated kernel meals**

| Treatments | Trypsin inhibitor activity[a] | Lectin activity[b] |
|---|---|---|
| Unheated | 22.3 | 102 |
| step A (30 min treatment) | ND | ND |
| step B (60 min treatment) | ND | ND |
| ND, not detected; [a,] mg trypsin inhibited per g sample [b,] 1/mg of meal that produced hemagglutination per ml of assay medium | | |

### 3. Evaluation of *Jatropha* kernel meal obtained using snails as a bioassay

No mortality of snails was observed by the extract obtained from the material obtained at step B (60 min treatment). Mortality of only 10 % to 20 % was observed by the extract obtained from the material obtained at step A (Table 3).

**Table 3. Snail mortality by the extracts from the treated kernel meal**

| Treatment | Mortality (%)* |
|---|---|
| step A (30 min treatment) extract | 10, 10, 20 |
| step B (60 min treatment) extract | 0, 0, 0 |
| * Assay performed in triplicate | |

Even though the detoxified kernel meal obtained at step A was free of phorbol esters as judged by HPLC, it does have small amounts of phorbol esters, which were below the sensitivity range of the HPLC. The presence and activity of these small amounts was shown by the sensitive snail bioassay. Even this sensitive assay did not detect toxic effects elicited by kernel meal obtained at step B.

In conclusion, the material obtained at step B (60 min) treatment is free of phorbol esters.

### 4. *In vitro* evaluation of the detoxified kernel meal

The kernel meal obtained at step B (60 min treatment) was evaluated for: a) amino acid analysis, b) available lysine value, and c) protein digestibility parameters.

The contents of amino acids and available lysine were determined, and *in vitro* protein digestibility was determined by treatment with pepsin, followed by treatment with trypsin, using the procedure of Saunders *et al.* (1972).

### 4.1 Amino acid content

The crude protein contents of the untreated kernel meal were 60.3% and that of the detoxified kernel meal (step B) was 63.0%. Amino acid levels are presented in Table 4.

The contents of available lysine in untreated and detoxified kernel meal of step B were 3.75 mg/100 mg protein and 3.82 mg/100 mg protein. The available lysine was determined using the trinitrobenzene sulfonic acid (TNBS) reagent, and we have found that the levels of available lysine by this method to be higher than that of total lysine determined using the amino acid analyzer. It is important that the available lysine value for the detoxified kernel meal should not be lower than for the untreated kernel meal. From these results it is evident that the detoxification process did not decrease the available lysine.

**Table 4. Amino acid composition (g/16 g nitrogen) of untreated kernel meal and detoxified kernel meal (step B)**

| Aminoacids | Untreated kernel meal | Detoxified kernel meal | Soybean meal | FAO (ref protein for a growing child) |
|---|---|---|---|---|
| *Essential* | | | | |
| Methionine | 1.84 | 1.55 | 1.22 | 2.50 |
| Cvstine | 1.51 | 1.36 | 1.70 | |
| Valine | 4.25 | 3.85 | 4.59 | 3.50 |
| Isoleucine | 3.98 | 3.90 | 4.62 | 2.80 |
| Leucine | 6.84 | 6.59 | 7.72 | 6.60 |
| Phenylalanine | 4.07 | 3.78 | 4.84 | 6.30 |
| Tvrosine | 2.99 | 2.49 | 3.39 | |
| Histidine | 3.08 | 2.32 | 2.50 | 1.90 |
| Lysine | 3.60 | 3.36 | 6.08 | 5.80 |
| Arginine | 11.8 | 9.46 | 7.13 | |
| Threonine | 3.38 | 2.53 | 3.76 | 3.40 |
| Tryptophan | 1.31 | ND | 1.24 | 1.10 |
| *Non-essential* | | | | |
| Serine | 4.65 | 3.81 | 5.67 | -- |
| Glutamic acid | 12.99 | 12.59 | 16.90 | -- |
| Aspartic acid | 11.41 | 8.28 | 11.30 | -- |
| Proline | 4.01 | 3.12 | 4.86 | -- |
| Glycine | 4.32 | 3.29 | 4.01 | -- |
| Alanine | 4.51 | 3.99 | 4.23 | -- |
| ND, Not determined | | | | |

### 4.2 *In vitro* protein digestibility

Table 5 shows pepsin and pepsin plus trypsin digestibility of the untreated and detoxified kernel meal (step B).

**Table 5. Pepsin and pepsin plus trypsin digestibility of the untreated and detoxified (step B) kernel meals**

| Treatments | Pepsin digestibility (%) | Pepsin plus trypsin digestibility (%) |
|---|---|---|
| Untreated kernel meal | 90.8 | 95.2 |
| Detoxified kernel meal | 72.9 | 85.8 |

The detoxification treatment decreases slightly the protein availability when compared to the untreated kernel meal. However, the protein digestibility of the detoxified kernel meal is high and is of the same order as for soymeal, ground nut meal and other conventional seed meals.

**5. *In vivo* evaluation of detoxified seed meal, using fish as a model**

Carp *(Cyprinus carpio)* was used to evaluate the quality of the detoxified kernel meal as a protein supplement and the toxicity, if any, on feeding diets containing the detoxified kernel meal obtained from step A and step B. Carp was chosen since it is one of the most sensitive species and is generally used in toxicological evaluation of various compounds (Dembele *et al.* 2000). Becker and Makkar, 1998 has also shown that carp is highly sensitive to *Jatropha* phorbol esters and can detect them at a level of 15 ppm in diet.

**5.1 Proximate composition of experimental diet and whole body**

The proximate composition of the different experimental diets (% dry matter) and whole body tissue (wet basis %) is presented in Tables 6 and 7, respectively. Diets contained about 38% crude protein and 18.5 kJ/g gross energy and were isonitrogenous and isocaloric. Dry matter, crude lipid and ash were in the range of 94.4-96.1 %, 8.3-8.8% and 10.3-11.1 %, respectively. There was no significant difference (P > 0.05) in moisture content, crude protein and ash of the whole body among the groups. Highest crude lipid deposition was observed in $J_{b75}$ group, which is statistically similar (P > 0.05) to all plant protein fed groups (except $J_{a75}$ group), whereas lowest lipid deposition was observed in $J_{a75}$ and control groups. Generally the whole body fat content increased with the use of dietary plant proteins, which could be due to imbalance in the amino acid concentrations in the diet or, to the higher content of starch in plant protein sources, which could get converted to lipid in the body by lipogenesis.

**Table 6: Proximate composition of experimental diets (% dry matter basis except Gross energy which was kJ/g)**

| Treatment | Dry matter | Crude protein | Crude lipid | Gross energy (kJ/g) | Ash |
|---|---|---|---|---|---|
| Control | 94.8 | 38.5 | 8.7 | 18.4 | 10.5 |
| $S_{50}$ | 94.4 | 38.3 | 8.3 | 18.7 | 11.0 |
| $S_{75}$ | 94.9 | 38.2 | 8.5 | 19.4 | 10.3 |
| $J_{a50}$ | 94.8 | 38.4 | 8.6 | 18.6 | 10.8 |
| Ja75 | 95.4 | 38.5 | 8.6 | 18.5 | 11.1 |
| $J_{b50}$ | 96.1 | 38.1 | 8.8 | 18.2 | 10.2 |
| $J_{b75}$ | 94.9 | 38.2 | 8.7 | 18.4 | 10.0 |

**Table 7: Chemical composition of body tissue of *Cyprinus carpio* fingerlings (% fresh basis except Gross energy which was kJ/g fresh weight) of different experimental groups at the start and at the end of the experiment**

| Treatment | Moisture | Crude protein | Crude lipid | Ash | Gross energy |
|---|---|---|---|---|---|
| Initial fish | 79.6 ± 0.06 | 13.3 ± 0.05 | 3.0 ± 0.01 | 4.4 ± 0.03 | 4.8 ± 0.03 |
| Control | 76.6 ± 0.64 | 14.6 ± 0.52 | 4.9[b] ± 0.23 | 2.2 ± 0.11 | 5.8[a] ± 0.16 |
| $S_{50}$ | 78.2±1.15 | 14.5±1.03 | 5.l[ab] ± 1.10 | 2.4±0.13 | 4.9[b] ± 0.51 |
| $S_{75}$ | 78.6 ± 2.10 | 14.4 ± 1.49 | 5.7[ab] ± 0.48 | 2.2 ± 0.28 | 5.0[b] ± 0.43 |
| $J_{a50}$ | 77.8 ± 1.88 | 15.1 ± 0.51 | 5.7[ab] ± 1.78 | 2.3 ± 0.20 | 5.2[ab] ± 0.83 |
| $J_{a75}$ | 78.6 ± 0.70 | 15.0 ± 0.27 | 5.0[b] ± 0.61 | 2.2 ± 0.07 | 4.9[b] ± 0.26 |
| $J_{b50}$ | 76.9 ± 1.05 | 15.7 ± 0.24 | 6.6[ab] ± 1.07 | 2.2 ± 0.06 | 5.9[a] ± 0.22 |
| $J_{b75}$ | 76.8 ± 0.56 | 15.3 ± 0.31 | 6.9[a] ± 0.78 | 2.2 ± 0.19 | 5.5[ab] ± 0.23 |
| SEM | 0.28 | 0.14 | 0.21 | 0.03 | 0.11 |

Mean values in the same column with different superscript differ significantly (P < 0.05).

## 5.2 Fish behavior and feed intake

Based on the visual observation during feeding time, palatability or acceptability of feed was good, and the behavior of fish was normal. There was no mortality during the entire experimental period.

It was particularly noted that the fish of the groups $J_{a75}$ (step A detoxified meal replaced at 75% level) fed very slowly on their feed. Sometimes they ingested the feed pellets and spit them out after a few seconds and they repeated this 2 to 3 times before finally ingesting and swallowing the pellets, whereas fish in all other dietary groups fed actively on the experimental diets throughout the experiment.

## 5.3 Growth performance and feed utilization

Weekly weight gains of fish are given in Figure 8. The growth performance of the fish at the end of the experimental period and the nutrient utilization are presented in Tables 8 and 9. Highest body weight gain (BWG%), specific growth rate (SGR%) and energy retention (ER%) were observed for the $J_{b50}$ group, which were significantly similar to that for control group and significantly (P< 0.05) higher than for all other groups. Highest ER% in $J_{b50}$ group indicates the highest gross energy content of the whole body. Lowest feed conversion ratio (FCR) (lower the FCR, higher is the feed conversion efficiency) was observed in control group, which is statistically similar to $J_{b50}$ group. Lowest metabolic growth rate (MGR), protein efficiency ratio (PER) and protein productive value (PPV) were observed in $J_{a75}$ group. This group had lowest growth rate as well. Except for $J_{b50}$ group, we found an only slight decrease of various growth and assimilation parameters (decrease in BWG, MGR, PER, PPV, and ER; and increase in FCR) in the fish fed diets containing increasing levels of plant protein in the diet.

**Table 8: Initial body mass (IBM), final body mass (FBM) and body mass gain (BMG) of *Cyprinus carpio* fed experimental diets for 8 weeks**

| Treatment | IBM (g) | FBM (g) | BMG (g) |
|---|---|---|---|
| Control | $3.2 \pm 0.1$ | $32.0^a \pm 1.96$ | $28.9^a \pm 1.95$ |
| $S_{50}$ | $3.3 \pm 0.1$ | $30.6^{ab} \pm 0.72$ | $27.3^{ab} \pm 0.68$ |
| $S_{75}$ | $3.2 \pm 0.1$ | $27.7^c \pm 0.57$ | $24.5^c \pm 0.64$ |
| $J_{a50}$ | $3.2 \pm 0.1$ | $24.9^d \pm 3.31$ | $21.7^d \pm 3.24$ |

(continued)

| Treatment | IBM (g) | FBM (g) | BMG (g) |
|---|---|---|---|
| Ja75 | $3.3 \pm 0.0$ | $20.9^e \pm 2.04$ | $17.7^e \pm 2.03$ |
| $J_{b50}$ | $3.2 \pm 0.1$ | $33.3^a \pm 0.64$ | $30.1^a \pm 0.63$ |
| $J_{b75}$ | $3.2 \pm 0.1$ | $28.3^{bc} \pm 1.21$ | $25.1^{bc} \pm 1.25$ |
| SEM | 0.01 | 0.88 | 0.88 |

Mean values in the same column with different superscript differ significantly ($P < 0.05$).

| Treatment | IBM (g) | FBM (g) | BMG (g) |
|---|---|---|---|
| Ja75 | $3.3 \pm 0.0$ | $20.9^e \pm 2.04$ | $17.7^e \pm 2.03$ |

**Table 9: Growth performance and nutrient utilization of *Cyprinus carpio* fed experimental diets for 8 weeks**

| Treatment | BWG | SGR | FCR | MGR |
|---|---|---|---|---|
| Control | $917.0^a \pm 59.63$ | $4.1^{ab} \pm 0.11$ | $1.00^b \pm 0.05$ | $19.1^{ab} \pm 0.30$ |
| $S_{50}$ | $826.8^b \pm 25.95$ | $4.0^{bc} \pm 0.05$ | $1.06^{ab} \pm 0.02$ | $18.3^{ab} \pm 0.27$ |
| $S_{75}$ | $758.1^{bc} \pm 39.13$ | $3.8^{cd} \pm 0.08$ | $1.02^b \pm 0.02$ | $17.9^{ab} \pm 0.31$ |
| $J_{a50}$ | $684.7^c \pm 90.12$ | $3.7^d \pm 0.21$ | $1.06^{ab} \pm 0.03$ | $17.3^b \pm 0.90$ |
| $J_{a75}$ | $542.8^d \pm 61.53$ | $3.3^e \pm 0.18$ | $1.15^{ab} \pm 0.03$ | $16.5^b \pm 0.76$ |
| $J_{b50}$ | $946.9^a \pm 26.34$ | $4.2^a \pm 0.05$ | $1.01^b \pm 0.02$ | $19.0^{ab} \pm 0.20$ |
| $J_{b75}$ | $774.0^{bc}$ | $\pm 58.23\ 3.9^{cd}$ | $\pm 0.12\ 1.21^a \pm 0.24$ | $21.4^a \pm 6.01$ |
| SEM | 27.24 | 0.06 | 0.02 | 0.51 |

| Treatment | | PER | PPV | ER |
|---|---|---|---|---|
| Control | | $2.6^a \pm 0.12$ | $38.8^{ab} \pm 2.41$ | $30.1^a \pm 1.91$ |
| $S_{50}$ | | $2.5^{ab} \pm 0.06$ | $38.0^{ab} \pm 1.87$ | $24.2^b \pm 2.64$ |
| $S_{75}$ | | $2.6^a \pm 0.05$ | $37.4^{ab} \pm 4.06$ | $23.2^b \pm 2.00$ |
| $J_{a50}$ | | $2.4^{ab} \pm 0.08$ | $37.7^{ab} \pm 1.97$ | $24.1^b \pm 4.76$ |
| Ja75 | | $2.3^b \pm 0.05$ | $34.7^b \pm 0.95$ | $20.8^b \pm 1.33$ |

(continued)

| Treatment | BWG | SGR | FCR | MGR |
|---|---|---|---|---|
| $J_{b50}$ | | $2.6^a \pm 0.04$ | $41.3^a \pm 0.88$ | $29.5^a \pm 0.93$ |
| $J_{b75}$ | | $2.2^b \pm 0.37$ | $34.4^b \pm 5.56$ | $23.3^b \pm 4.01$ |
| SEM | | 0.04 | 0.71 | 0.82 |

Mean values in the same column with different superscript differ significantly (P < 0.05).
BWG (%) - Body weight gain, SGR (%) - Specific growth rate and FCR - Feed conversion ratio; MGR (gkg$^{0.8}$/day) - Metabolic growth rate, PER - Protein efficiency ratio, PPV (%)- Protein productive value and ER (%)- Energy retention

The growth performance of $J_{b50}$ and control and of $J_{b75}$ and $S_{75}$ were similar; whereas that of $J_{a50}$ and $J_{a75}$ were lower than of control (Figure 4).

## 5.4 Dry matter and nutrient digestibility

The digestibility of dry matter and nutrients of different experimental diets are given in Table 10. The dry matter, nutrient and energy digestibility were somewhat lower in $J_{a50}$ and $J_{a75}$ groups. No such difference was noticed for $J_{b50}$, $J_{b75}$ and soymeal supplemented groups. Another interesting point to note is that the protein and energy digestibility were statistically similar (P> 0.05) for control and $J_{b50}$ groups. These values were highest, suggesting good utilization of protein and energy from the detoxified *Jatropha* meal (obtained at step B), when supplemented in the diet at 50% replacement of fish meal protein. This is also reflected in high PER and ER values for this group, which were comparable with those of control group (Table 9).

**Table 10: Effects of experimental diets on the dry matter and nutrient digestibility (%) of *Cyprinus carpio* fingerlings**

| Treatment | Dry matter digestibility | Protein digestibility | Lipid digestibility | Energy digestibility |
|---|---|---|---|---|
| Control | $84.4^a \pm 0.40$ | $92.3^a \pm 0.45$ | $97.2^a \pm 0.68$ | $87.7^a \pm 1.33$ |
| $S_{50}$ | $81.3^c \pm 0.45$ | $91.3^b \pm 0.31$ | $94.O^b \pm 0.82$ | $83.6^b \pm 0.51$ |
| $S_{75}$ | $77.9^d \pm 0.29$ | $88.6^c \pm 0.71$ | $92.5^c \pm 1.11$ | $82.8^b \pm 1.47$ |
| $J_{a50}$ | $73.1^f \pm 0.73$ | $87.7^d \pm 0.75$ | $89.7^d \pm 0.74$ | $77.9^c \pm 3.14$ |
| $J_{a75}$ | $74.8^e \pm 0.93$ | $87.3^d \pm 0.94$ | $89.2^d \pm 1.31$ | $78.0^c \pm 2.84$ |
| $J_{b50}$ | $82.5^b \pm 0.25$ | $92.2^a \pm 0.39$ | $95.0^b \pm 0.91$ | $87.6^a \pm 1.11$ |
| $J_{b75}$ | $80.6^c \pm 0.12$ | $90.6^b \pm 0.07$ | $92.1^c \pm 0.90$ | $83.1^b \pm 0.95$ |
| SEM | 0.74 | 0.39 | 0.53 | 0.78 |

Mean values in the same column with different superscript differ significantly (P < 0.05).

## 5.5 Spleen, hepatosomatic and intestinal somatic index

There was no significant difference in intestinal somatic index (ISI) amongst the different groups. Although some significant, but minor differences were observed in hepatosomatic index (HSI) and spleen index, these do not indicate toxicity (Table 11).

**Table 11: Effects of experimental diets on the spleen index, hepatosomatic index (HSI) and intestinal somatic index (ISI) of *Cyprinus carpio* fingerlings**

| Treatment | Spleen index | HSI | ISI |
|---|---|---|---|
| Control | $0.16^{ab} \pm 0.02$ | $2.12^{b} \pm 0.03$ | $2.99 \pm 0.26$ |
| $S_{50}$ | $0.16^{ab} \pm 0.01$ | $2.26^{ab} \pm 0.06$ | $3.06 \pm 0.15$ |
| $S_{75}$ | $0.18^{a} \pm 0.01$ | $2.36^{a} \pm 0.12$ | $3.23 \pm 0.56$ |
| $J_{a50}$ | $0.15^{b} \pm 0.01$ | $2.20^{b} \pm 0.05$ | $3.07 \pm 0.17$ |
| $J_{a75}$ | $0.17^{a} \pm 0.02$ | $2.23^{ab} \pm 0.10$ | $3.12 \pm 0.34$ |
| $J_{b50}$ | $0.16^{ab} \pm 0.01$ | $2.24^{b} \pm 0.04$ | $3.08 \pm 0.03$ |
| $J_{b75}$ | $0.16^{ab} \pm 0.02$ | $2.35^{a} \pm 0.07$ | $3.09 \pm 0.36$ |
| SEM | 0.01 | 0.02 | 0.05 |

Mean values in the same column with different superscript differ significantly ($P < 0.05$).

### 4.5 Blood parameters and histopathology

The erythrocyte count (RBC), hemoglobin content (Hb), hematocrit (Hct), mean corpuscular volume (MCV), mean corpuscular hemoglobin (MCH) and mean corpuscular hemoglobin concentration (MCHC) are given in Table 12. These values were within the normal range in fish and do not indicate any toxicity.

Enzyme activities in blood are shown in Table 13. ALP level rises during bile duct obstruction and in intrahepatic infiltrative diseases of the liver. In our study ALP activities in $J_{a75}$ and $S_{75}$ groups were statistically similar, and these values were significantly higher, when compared with those of other groups. Higher ALP activity in $J_{a75}$ and $S_{75}$ groups might be an indication of liver dysfunction. It is surprising that high ALP activity was observed in $S_{75}$ group, which is a soybean meal containing diet.

**Table 12: Effects of experimental diets on the hematological parameters (RBC ($10^6$ cells/mm$^3$), WBC ($10^5$ cells/mm$^3$), Hb (g/dl), Hct (%), MCV (fL), MCH (pg), MCHC (g/dl) of *Cyprinus carpio***

| Treatment | RBC | WBC | Hb | Hct | MCV | MCH | MCHC |
|---|---|---|---|---|---|---|---|
| Control | $1.58^{b} \pm 0.10$ | $1.43 \pm 0.07$ | $5.00 \pm 0.00$ | $29.75 \pm 2.73$ | $189.3^{ab} \pm 4.16$ | $31.8^{ab} \pm 1.99$ | $17.14 \pm 2.79$ |
| $S_{50}$ | $1.71ab \pm 0.08$ | $1.73 \pm 0.08$ | $5.00 \pm 0.00$ | $32.25 \pm 1.89$ | $189.5^{ab} \pm 18.53$ | $29.3^{ab} \pm 1.35$ | $15.54 \pm 0.87$ |
| $S_{75}$ | $1.87^{a} \pm 0.07$ | $1.75 \pm 0.07$ | $5.00 \pm 0.00$ | $27.50 \pm 5.00$ | $147.6^{b} \pm 7.32$ | $26.8^{b} \pm 0.97$ | $18.63 \pm 1.32$ |
| $J_{a50}$ | $1.67^{ab} \pm 0.16$ | $1.65 \pm 0.16$ | $5.48 \pm 0.96$ | $30.00 \pm 2.57$ | $179.6^{ab} \pm 13.48$ | $33.^{a} \pm 7.07$ | $19.30 \pm 1.02$ |
| $J_{a75}$ | $1.87^{a} \pm 0.03$ | $1.60 \pm 0.03$ | $5.00 \pm 0.00$ | $31.75 \pm 1.71$ | $170.0^{ab} \pm 8.03$ | $26.8^{b} \pm 0.47$ | $15.78 \pm 0.83$ |
| $J_{b50}$ | $1.74^{ab} \pm 0.20$ | $1.50 \pm 0.08$ | $5.00 \pm 0.00$ | $35.25 \pm 5.74$ | $205.3^{a} \pm 43.06$ | $29.1^{ab} \pm 3.37$ | $14.52 \pm 2.73$ |
| $J_{b75}$ | $1.85^{a} \pm 0.13$ | $1.85 \pm 0.11$ | $5.22 \pm 0.43$ | $31.75 \pm 8.54$ | $172.0^{ab} \pm 7.61$ | $28.2^{ab} \pm 0.74$ | $17.60 \pm 1.93$ |
| SEM | 0.03 | 0.13 | 0.07 | 1.02 | 6.61 | 0.67 | 0.70 |

Mean values in the same column with different superscript differ significantly ($P < 0.05$); MCH: Mean corpuscular volume (pg); MCHC: Mean corpuscular hemoglobin concentration (g/dl)

**Table 13: Effects of experimental diets on alkaline phosphatase (U/l), alanine transaminase (U/l) and amylase (U/l) in blood of *Cyprinus carpio* fingerlings**

| Treatment | ALP | ALT |
|---|---|---|
| Control | $84.75^{b} \pm 55.1$ | $92.00^{a} \pm 6.63$ |
| $S_{50}$ | $106.5^{ab} \pm 51.8$ | $76.75^{ab} \pm 10.3$ |

| | | |
|---|---|---|
| $S_{75}$ | $159.25^a \pm 67.5$ | $71.25^b \pm 3.10$ |
| $J_{a50}$ | $60.75^b \pm 34.2$ | $69.75^b \pm 5.73$ |
| $J_{a75}$ | $161.75^a \pm 24.5$ | $68.00^b \pm 23.6$ |
| $J_{b50}$ | $114.75^{ab} \pm 52.1$ | $85.75^{ab} \pm 4.57$ |
| $J_{b75}$ | $74.5^b \pm 32.5$ | $80.25^{ab} \pm 10.2$ |
| SEM | 5.02 | 2.61 |

Mean values in the same column with different superscript differ significantly ($P < 0.05$). 1 U = 16.66 nKat/l; nKat = Amount of glandular kallikrein, which cleaves 0.005 mmol of substrate per minute

Alanine aminotransferase (ALT), also called serum glutamic pyruvate transaminase (SGPT), is an enzyme present in hepatocytes. When liver cells are damaged, it leaks into the blood. ALT rises dramatically in acute liver damage. In our study ALT activity in control was the highest, again indicating no toxicity in any of the plant protein fed groups.

**4.5.1 Lysozyme activity in serum**

Lysozyme activity in the serum of different experimental groups is shown in Table 10. Lysozyme plays an important role in non-specific immune responses, and it has been found in mucus, serum and ova of fish. Innate immunity due to lysozyme is caused by lysis of bacterial cell wall. This stimulates the phagocytosis of bacteria. The suppression of the non-specific immune capacity by high concentrations of dietary soybean proteins has been reported in rainbow trout (Burrells et al., 1999). In our study, there was no significant difference in lysozyme activity, but numerically it was higher in plant based fed diet (except $J_{a75}$ group) groups, which shows that plant ingredients act as immunostimulating in fish.

**4.5.2 Albumin, globulin and total protein in the blood**

Albumin, globulin and total protein in the blood of the fish of different experimental groups are shown in Table 14. The concentration of total protein in blood was used as a basic index for health status of fish. Among the blood proteins, albumin and globulin are the major protein. Globulin is important for its immunological responses, especially its gamma component. Herein, total protein contents were almost similar in all the groups. Albumin content was lower in $J_{a50}$ and $J_{a75}$ groups but these values were similar to that in S75 group. Albumin contents in $J_{b50}$ and $J_{b75}$ were similar to that in control group. Globulin concentration in blood was higher in plant protein fed groups compared to animal protein fed groups. These results are consistent with the higher lysozyme activity observed in plant protein fed groups. Overall, albumin, globulin and total protein contents suggest no adverse effects in any of the groups.

**Table 14: Lysozyme activity (IU/ml) in the serum, albumin (g/dl), globulin (g/dl) and total protein (g/dl) in the blood of *Cyprinus carpio* fingerlings fed diets of the invention**

| Treatment | Lysozyme activity | Albumin | Globulin | Total protein |
|---|---|---|---|---|
| Control | $336.4 \pm 32.0$ | $1.98^a \pm 0.15$ | $0.88^c \pm 0.17$ | $2.85^{ab} \pm 0.13$ |
| $S_{50}$ | $403.7 \pm 101.9$ | $1.63^{bc} \pm 0.21$ | $1.15^{bc} \pm 0.13$ | $2.80^{ab} \pm 0.16$ |
| $S_{75}$ | $457.5 \pm 107.3$ | $1.43^{bc} \pm 0.28$ | $1.18^{bc} \pm 0.17$ | $2.63^b \pm 0.13$ |

(continued)

| Treatment | Lysozyme activity | Albumin | Globulin | Total protein |
|---|---|---|---|---|
| $J_{a50}$ | 328.5 ± 100.1 | 1.43$^{bc}$ ± 0.10 | 1.45$^{ab}$ ± 0.31 | 2.87$^{ab}$ ± 0.34 |
| $J_{a75}$ | 287.5 ± 107.2 | 1.35$^{c}$ ± 0.19 | 1.75$^{a}$ ± 0.30 | 3.10$^{a}$ ± 0.20 |
| $J_{b50}$ | 447.7 ± 172.9 | 1.73$^{ab}$ ± 0.13 | 1.03$^{c}$ ± 0.19 | 2.75$^{b}$ ± 0.17 |
| $J_{b75}$ | 401.8 ± 186.7 | 1.63$^{bc}$ ± 0.35 | 1.20$^{bc}$ ± 0.12 | 2.80$^{ab}$ ± 0.24 |
| SEM | 23.75 | 0.05 | 0.06 | 0.04 |

IU - The amount of enzyme required to produce a change in the absorbance at 450 nm of 0.001 units per minute at pH 6.24 and 25 °C, using a suspension of *Micrococcus lysodeikticus* as the substrate. Mean values in the same column with different superscript differ significantly (P < 0.05).

### 4.5.3 Glucose, total bilirubin (TBIL), creatinine and ions in blood

Concentration of blood glucose, TBIL, creatinine and ions (calcium, phosphorus, sodium and potassium) are shown in Tables 15 and 16. Lower blood glucose level was in animal protein fed group, i.e. control group, whereas plant fed groups had higher blood glucose level. As content of plant material increased in diet, blood glucose level also increased. This could be ascribed to higher level of carbohydrates in plant based diet, which propel to form more glucose in the blood. There was no change in total bilirubin content in the blood. Creatinine level in the control was higher, but was similar for soybean meal and detoxified *Jatropha* meal fed groups. The ion levels were also within the normal ranges. These results also suggest no toxicity in any of the groups.

**Table 15: Effects of experimental diets on glucose (mg/dl), total bilirubin (mg/dl), blood urea nitrogen (mg/dl) and creatinine (mg/dl) in blood of *Cyprinus carpio* fingerlings**

| Treatment | Glucose | TBIL | Creatinine |
|---|---|---|---|
| Control | 72.75$^{b}$ ± 4.03 | 0.3 ± 0.00 | 1.35$^{a}$ ± 0.70 |
| $S_{50}$ | 91.25$^{ab}$ ± 8.81 | 0.225 ± 0.05 | 0.40$^{b}$ ± 0.14 |
| $S_{75}$ | 99.00$^{a}$ ± 2.46 | 0.275 ± 0.05 | 0.25$^{b}$ ± 0.06 |
| $J_{a50}$ | 86.75$^{ab}$ ± 8.62 | 0.25 ± 0.06 | 0.25$^{b}$ ± 0.06 |
| $J_{a75}$ | 97.50$^{a}$ ± 2.82 | 0.25 ± 0.06 | 0.23$^{b}$ ± 0.05 |
| $J_{b50}$ | 87.75$^{ab}$ ± 4.03 | 0.225 ± 0.05 | 0.33$^{b}$ ± 0.15 |
| $J_{b75}$ | 97.75$^{a}$ ± 5.63 | 0.225 ± 0.05 | 0.20$^{b}$ ± 0.00 |
| SEM | 2.95 | 0.01 | 0.09 |

**Table 16: Effects of experimental diets on blood ions (calcium (mg/dl), phosphorus mg/dl, sodium (mmol/l) and potassium (mmol/l) of *Cyprinus carpio* fingerlings**

| Treatment | Calcium | Phosphorus | Sodium | Potassium |
|---|---|---|---|---|
| Control | $10.43 \pm 1.05$ | $5.93 \pm 0.98$ | $131.25 \pm 3.86$ | $1.55^{ab} \pm 0.10$ |
| $S_{50}$ | $10.53 \pm 0.64$ | $7.93 \pm 0.38$ | $130.25 \pm 3.30$ | $1.50^{bc} \pm 0.00$ |
| $S_{75}$ | $10.35 \pm 0.39$ | $7.45 \pm 0.87$ | $133.50 \pm 4.20$ | $4.23^{cd} \pm 0.51$ |
| $J_{a50}$ | $9.98 \pm 0.59$ | $7.63 \pm 0.23$ | $129.00 \pm 1.63$ | $2.18^{e} \pm 0.50$ |
| $J_{a75}$ | $10.60 \pm 1.14$ | $5.10 \pm 1.69$ | $129.50 \pm 1.91$ | $2.80^{d} \pm 0.76$ |

(continued)

| Treatment | Calcium | Phosphorus | Sodium | Potassium |
|---|---|---|---|---|
| $J_{b50}$ | $10.15 \pm 0.39$ | $7.78 \pm 1.13$ | $131.00 \pm 2.45$ | $4.40^{a} \pm 0.57$ |
| $J_{b75}$ | $9.60 \pm 0.42$ | $6.30 \pm 1.10$ | $130.75 \pm 2.06$ | $2.85^{cd} \pm 0.17$ |
| SEM | 0.14 | 0.43 | 0.55 | 0.31 |

Mean values in the same column with different superscript differ significantly ($P < 0.05$).

### 4.5.4 Histopathological findings

Liver, kidney and spleen sections of all the groups were normal. Pathological alterations characterized as 'Catarrhal enteritis' (necrosis of enterocytes, denudation of the lamina epithelial layers and influx of leucocytes into the lamina propria) were observed only in sections of gut tissues of $J_{a50}$ and $J_{a75}$ groups. Hyperemia and inflammation were also observed in the gut sections from these two groups. The degree of changes was higher in $J_{a75}$ than in $J_{a50}$, i.e. the higher the incorporation of step A detoxified kernel meal in the diet was, the higher the degree of adverse effects was. The gut was the first organ that went in contact with the toxin. The level of the toxin was not high enough to elicit adverse effects in other organs. In the intestine, necrosis of enterocytes on the tips and sides, contracting and shortening of the villus impacts digestion and absorption. It may be noted that the growth performance and nutrient utilization were also lowest in $J_{a75}$ group. It may be recalled that snail mortality was observed by the extract obtained from step A detoxified kernel meal. These results suggest that feeding of step B detoxified kernel meal does not produce any adverse effects in organs, and it is safe for inclusion in fish diet.

### 5.7 Phorbol esters in muscle

Phorbol esters were measured in liver, intestine and muscle of fish fed detoxified *Jatropha* kernel meal (step B). These organs were free of phorbol esters, suggesting that the fish are safe for human consumption.

### References

Adams, S. M., Greeley, M.S., Mchughlaw, J., Edward, J., Noga, E. J. and Zelikoff, J. T. (2003). Estuaries. 26(5): 1365-1382.

Aregheore, E.M., Becker, K. and Makkar, H.P.S. (2003). S. Pac. J. Nat. Sci. 21: 50-56.

Becker, K. and Makkar, H.P.S. (1998). Vet. Human Toxicol. 40: 82-86.

Burrells, C., Williams, P.D., Southgate, P.J. and Crampton, V.O. (1999). Vet. Immunol. Immunopathol. 72: 277- 288.

Dembele, K., Haubruge, E. and Gaspar, C. (2000). Ecotoxicology and Environmental Safety 45: 49-54.

Dongmeza, E., Siddhuraju P., Francis G. and Becker K. (2006). Aquaculture. 261: 407-422.

Feitosa dos Santos, A. and Goulart Sant'Ana, A.E. (1999). 13: 660-664.

Goel, G., Makkar, H.P., Francis, G., Becker, K. (2007). Int. J. Toxicol. 26(4): 279-288.

Gross, H., Foidl, G., Foidl, N., (1997). Jatropha Conference, 4.4, 179-182

Liu, S. Y., Sporer, F., Wink, M., Jourdane, J., Henning, R., Li, Y.L. and Ruppel, A. (1997). Tropical Medicine and International Health, 2(2): 179-188.

Makkar, H.P.S. and Becker, K. (1997). In: Biofuels and industrial products from Jatropha curcas (Guebitz, G.M., Mittelbach, M., Trabi, M., eds.). 190-205, Dbv-Verlag für die Technische Universität Graz, Austria.

Makkar, H.P.S., Becker, K., Sporer, F. and Wink, M. (1997). J Agric. Food Chem. 45: 3152-3157.

Makkar, H.P.S., Maes J., De Greyt W., and Becker K., (2009). J Am Oil Chem Soc., 86:173-181

Martinez-Herrera, J., Siddhuraju, P., Francis, G., Davila-Ortiz, G. and Becker, K. (2006). Food Chem. 96 (1): 0-89.

Saunders, R. M., Connor, M. A., Booth, A. N., Bickoff, E. M. and Kohler, G. O. (1972). Journal of Nutrition, 103: 530-535.

### Claims

1. A method for detoxifying plant constituents from *Jatropha* comprising in the following order the steps of:

   a) providing at least one plant constituent of *Jatropha*;

b) adding a solvent comprising simultaneously methanol and sodium hydroxide to the constituent to obtain a mixture;

c) heating the mixture; and

d) separating the mixture to yield a residue;

wherein the solvent comprises methanol at a concentration of about 70 % to about 95 % and sodium hydroxide at a concentration of about 0.01 M to about 0.3 M, a quantitative proportion of the plant constituent to the solvent is about 1:10 (w/v) in the mixture and a phorbol ester concentration of the residue is below 10 ppm.

2. The method of claim 1 further comprising in the following order the steps of:

e) adding methanol to the residue to obtain a blend;

f) heating the blend; and

g) separating the blend to obtain a second residue.

3. The method of claim 2, wherein the phorbol ester concentration of the second residue is about 0.001 mg/g or less.

4. The method of any of the preceding claims, wherein *Jatropha* is *Jatropha curcas,* preferably a toxic genotype of *Jatropha curcas,* or a cross of different *Jatropha* species, preferably of toxic genotypes of *Jatropha curcas.*

5. The method of any of the preceding claims, wherein the solvent comprises methanol at a concentration of about 80 % to about 90 %, most preferably about 90 %.

6. The method of any of the preceding claims, wherein the solvent comprises sodium hydroxide at a concentration of about 0.05 M to about 0.2 M, most preferably about 0.1 M.

7. The method of any of the claims 2 to 6, wherein the quantitative proportion of the plant constituent to methanol is about 1:10 (w/v) in the blend.

8. The method of any of the preceding claims, wherein heating is performed at a temperature of about 50°C to about 70°C, preferably about 60°C to about 70°C.

9. The method of any of the preceding claims further comprising the step of washing the residue with methanol.

10. The method of any of the preceding claims further comprising the step of autoclaving the residue, preferably at a moisture of about 75 %.


**Patentansprüche**

1. Verfahren zum Entgiften von Pflanzeninhaltsstoffen aus *Jatropha* umfassend, in der folgenden Reihenfolge, die Schritte:

a) Bereitstellen von mindestens einem Pflanzeninhaltsstoff aus *Jatropha;*

b) Zugeben eines Lösungsmittels, das gleichzeitig Methanol und Natriumhydroxid umfasst, zu dem Inhaltsstoff, um ein Gemisch zu erhalten;

c) Erhitzen des Gemischs; und

d) Trennen des Gemischs, um einen Rückstand zu erhalten;

wobei das Lösungsmittel Methanol in einer Konzentration von etwa 70 % bis etwa 95 % und Natriumhydroxid in einer Konzentration von etwa 0,01 M bis etwa 0,3 M umfasst, ein Mengenverhältnis von dem Pflanzeninhaltsstoff zu dem Lösungsmittel in dem Gemisch etwa 1:10 (w/v) beträgt und eine Phorbolesterkonzentration des Rückstands unter 10 ppm beträgt.

2. Verfahren nach Anspruch 1, weiter umfassend, in der folgenden Reihenfolge, die Schritte:

e) Zugeben von Methanol zu dem Rückstand, um eine Mischung zu erhalten;

f) Erhitzen der Mischung; und

g) Trennen der Mischung, um einen zweiten Rückstand zu erhalten.

**3.** Verfahren nach Anspruch 2, wobei die Phorbolesterkonzentration des zweiten Rückstands etwa 0,001 mg/g oder weniger beträgt.

**4.** Verfahren nach einem der vorhergehenden Ansprüche, wobei *Jatropha Jatropha curcas,* vorzugsweise ein giftiger Genotyp von *Jatropha curcas,* oder eine Kreuzung von verschiedenen *Jatropha* Spezies, vorzugsweise von giftigen Genotypen von *Jatropha curcas,* ist.

**5.** Verfahren nach einem der vorhergehenden Ansprüche, wobei das Lösungsmittel Methanol in einer Konzentration von etwa 80 % bis etwa 90 %, am meisten bevorzugt etwa 90 % umfasst.

**6.** Verfahren nach einem der vorhergehenden Ansprüche, wobei das Lösungsmittel Natriumhydroxid in einer Konzentration von etwa 0,05 M bis etwa 0,2 M, am meisten bevorzugt etwa 0,1 M umfasst.

**7.** Verfahren nach einem der Ansprüche 2 bis 6, wobei das Mengenverhältnis von dem Pflanzeninhaltsstoff zu Methanol in der Mischung etwa 1:10 (w/v) beträgt.

**8.** Verfahren nach einem der vorhergehenden Ansprüche, wobei das Erhitzen bei einer Temperatur von etwa 50°C bis etwa 70°C, vorzugsweise etwa 60°C bis etwa 70°C durchgeführt wird.

**9.** Verfahren nach einem der vorhergehenden Ansprüche, weiter umfassend den Schritt des Waschens des Rückstands mit Methanol.

**10.** Verfahren nach einem der vorhergehenden Ansprüche, weiter umfassend den Schritt des Autoklavierens des Rückstands, vorzugsweise bei einer Feuchtigkeit von etwa 75 %.

**Revendications**

**1.** Procédé de détoxification de composants végétaux de *Jatropha* comprenant dans l'ordre suivant les étapes de:

  a) fournir au moins un composant végétal de *Jatropha;*
  b) ajouter au composant un solvant comprenant à la fois du méthanol et de l'hydroxyde de sodium pour obtenir un mélange;
  c) réchauffer le mélange; et
  d) séparer le mélange pour produire un résidu;
  dans lequel le solvant comprend du méthanol à une concentration d'environ 70 % à environ 95 % et de l'hydroxyde de sodium à une concentration d'environ 0,01 M à environ 0,3 M, une proportion quantitative du composant végétal par rapport au solvant est d'environ 1:10 (w/v) dans le mélange et une concentration d'esters de phorbol du résidu est inférieure à 10 ppm.

**2.** Procédé selon la revendication 1, comprenant en outre dans l'ordre suivant les étapes de:

  e) ajouter du méthanol au résidu pour obtenir une mixture;
  f) réchauffer la mixture; et
  g) séparer la mixture pour obtenir un deuxième résidu.

**3.** Procédé selon la revendication 2, dans lequel la concentration d'esters de phorbol du deuxième résidu est d'environ 0,001 mg/g ou inférieure.

**4.** Procédé selon l'une quelconque des revendications précédentes, dans lequel le *Jatropha* est le *Jatropha curcas,* de préférence un génotype toxique du *Jatropha curcas,* ou un croisement de différentes espèces de *Jatropha,* de préférence de génotypes toxiques du *Jatropha curcas.*

**5.** Procédé selon l'une quelconque des revendications précédentes, dans lequel le solvant comprend du méthanol à une concentration d'environ 80 % à environ 90 %, plus préférablement d'environ 90 %.

**6.** Procédé selon l'une quelconque des revendications précédentes, dans lequel le solvant comprend de l'hydroxyde de sodium à une concentration d'environ 0,05 M à environ 0,2 M, plus préférablement d'environ 0,1 M.

**7.** Procédé selon l'une quelconque des revendications 2 à 6, dans lequel la proportion quantitative du composant végétal par rapport au méthanol est d'environ 1:10 (w/v) dans la mixture.

**8.** Procédé selon l'une quelconque des revendications précédentes, dans lequel le réchauffage est effectué à une température d'environ 50°C à environ 70°C, de préférence d'environ 60°C à environ 70°C.

**9.** Procédé selon l'une quelconque des revendications précédentes, comprenant en outre l'étape de nettoyage du résidu avec du méthanol.

**10.** Procédé selon l'une quelconque des revendications précédentes, comprenant en outre l'étape de traitement en autoclave du résidu, de préférence avec une humidité d'environ 75 %.

FIG. 1

FIG. 2

**FIG. 3**

**FIG. 4**

## REFERENCES CITED IN THE DESCRIPTION

### Non-patent literature cited in the description

- **ADAMS, S. M. ; GREELEY, M.S. ; MCHUGHLAW, J. ; EDWARD, J. ; NOGA, E. J. ; ZELIKOFF, J. T.** *Estuaries,* 2003, vol. 26 (5), 1365-1382
- **AREGHEORE, E.M. ; BECKER, K. ; MAKKAR, H.P.S.** *S. Pac. J. Nat. Sci.,* 2003, vol. 21, 50-56
- **BECKER, K. ; MAKKAR, H.P.S.** *Vet. Human Toxicol.,* 1998, vol. 40, 82-86
- **BURRELLS, C. ; WILLIAMS, P.D. ; SOUTHGATE, P.J. ; CRAMPTON, V.O.** *Vet. Immunol. Immunopathol.,* 1999, vol. 72, 277-288
- **DEMBELE, K. ; HAUBRUGE, E. ; GASPAR, C.** *Ecotoxicology and Environmental Safety,* 2000, vol. 45, 49-54
- **DONGMEZA, E. ; SIDDHURAJU P. ; FRANCIS G. ; BECKER K.** *Aquaculture,* 2006, vol. 261, 407-422
- **GOEL, G. ; MAKKAR, H.P. ; FRANCIS, G. ; BECKER, K.** *Int. J. Toxicol.,* 2007, vol. 26 (4), 279-288
- **GROSS, H. ; FOIDL, G. ; FOIDL, N.** *Jatropha Conference,* 1997, vol. 4.4, 179-182
- **LIU, S. Y. ; SPORER, F. ; WINK, M. ; JOURDANE, J. ; HENNING, R. ; LI, Y.L. ; RUPPEL, A.** *Tropical Medicine and International Health,* 1997, vol. 2 (2), 179-188
- Biofuels and industrial products from Jatropha curcas. **MAKKAR, H.P.S. ; BECKER, K.** Biofuels and industrial products from Jatropha curcas. Dbv-Verlag für die Technische Universität Graz, Austria, 1997, 190-205
- **MAKKAR, H.P.S. ; BECKER, K. ; SPORER, F. ; WINK, M.** *J Agric. Food Chem.,* 1997, vol. 45, 3152-3157
- **MAKKAR, H.P.S. ; MAES J. ; DE GREYT W. ; BECKER K.** *J Am Oil Chem Soc.,* 2009, vol. 86, 173-181
- **MARTINEZ-HERRERA, J. ; SIDDHURAJU, P. ; FRANCIS, G. ; DAVILA-ORTIZ, G. ; BECKER, K.** *Food Chem.,* 2006, vol. 96 (1), 0-89
- **SAUNDERS, R. M. ; CONNOR, M. A. ; BOOTH, A. N. ; BICKOFF, E. M. ; KOHLER, G. O.** *Journal of Nutrition,* 1972, vol. 103, 530-535